# EUROPEAN PATENT SPECIFICATION

(11) **EP 4 231 415 B1**
(45) Date of publication and mention of the grant of the patent: **15.07.2026**
(21) Application number: 21895164.8
(22) Date of filing: 19.11.2021
(51) Int. Cl.: H01M 50/124, H01M 50/131, H01M 50/105, H01M 10/48, G01N 21/29, B32B 15/085, B32B 15/20, B32B 15/088, B32B 27/08, B32B 27/20, B32B 27/32, B32B 27/34, B32B 27/36, G01N 21/88, H01M 50/119, H01M 50/121, H01M 50/126, G01N 21/25, H01M 50/133

(54) **METHOD FOR MANUFACTURING POUCH CASE OF SECONDARY BATTERY, AND POUCH FILM OF SECONDARY BATTERY AND POUCH CASE OF SECONDARY BATTERY**
VERFAHREN ZUR HERSTELLUNG EINES BEUTELGEHÄUSES EINER SEKUNDÄRBATTERIE SOWIE BEUTELFOLIE FÜR SEKUNDÄRBATTERIE UND BEUTELGEHÄUSE EINER SEKUNDÄRBATTERIE
PROCÉDÉ DE FABRICATION D'UN BOÎTIER D'ENVELOPPE D'UNE BATTERIE SECONDAIRE, ET FILM D'ENVELOPPE D'UNE BATTERIE SECONDAIRE ET BOÎTIER D'ENVELOPPE D'UNE BATTERIE SECONDAIRE

(30) Priority: 23.11.2020 KR 20200158223; 26.10.2021 KR 20210143257
(43) Date of publication of application: 23.08.2023
(60) Divisional application: 25196112.4
(73) Proprietor: LG Energy Solution, Ltd., Seoul 07335 (KR)
(72) Inventor: KIM, Kyoung Ha, Daejeon 34122 (KR); CHOI, Yang Lim, Daejeon 34122 (KR)
(74) Representative: Plasseraud IP
(86) International application number: PCT/KR2021/017112
(87) International publication number: WO 2022/108397

(56) References cited:
- WO-A1-2020/032480
- JP-A- 2017 177 412
- JP-A- 2018 015 986
- KR-A- 20110 055 254
- KR-A- 20120 067 727
- KR-A- 20120 067 734
- KR-A- 20180 095 294
- KR-A- 20190 051 537

## Description

### CROSS-REFERENCE TO RELATED APPLICATION

The present application claims the benefit of the priority of Korean Patent Application Nos. 10-2020-0158223, filed on November 23, 2020, and 10-2021-0143257, filed on October 26, 2021.

### TECHNICAL FIELD

The present invention relates to a method for manufacturing a pouch case of a secondary battery, and a pouch film of a secondary battery and a pouch case of a secondary battery. During a process of manufacturing a pouch by forming a pouch film, an elongation rate can be measured by the color of an outer layer of the pouch film without separate sampling, and it can be determined whether or not elongation has occurred which causes a critical level in which a crack is about to occur or a defective level in which a crack is occurring.

### BACKGROUND ART

Secondary batteries that are repeatedly chargeable and dischargeable may be classified into a cylindrical secondary battery, a prismatic secondary battery, a pouch-type secondary battery, or the like, depending on structures and manufacturing methods thereof. According to the related art, the cylindrical battery or the prismatic battery has been widely used in which metal cans are generally used as an exterior material for a secondary battery. However, the battery having this structure has a fixed shape and thus restricts the design of an electronic product that uses the battery as a power source, and it is also difficult to reduce the volume thereof. Thus, the development of the pouch-type secondary battery has been actively performed.

The pouch-type secondary battery generally has a structure in which an electrode assembly is accommodated in a sheet-shaped pouch film (or a pouch exterior material), and the electrode assembly has a structure in which electrodes and separators are alternately disposed. Specifically, a case is roughly divided into a lower case having a cup portion (or an accommodation portion) and an upper case covering the lower case, and the electrode assembly embedded in the cup portion is made by stacking positive electrodes, negative electrodes, and separators. An electrode tab is drawn from each of the electrodes, and tape is attached to a portion of the electrode tab that overlaps with a sealing portion.

The pouch-type secondary battery having this structure has a relatively easily deformable shape unlike the cylindrical battery, and the secondary battery may achieve the same capacity with smaller volume and mass. However, a pouch case made of a soft material is used as a container, and thus, mechanical strength becomes weak.

Particularly, the pouch case has the cup portion through forming of the sheet-type pouch film, and elongation occurs inevitably during the manufacturing process. When excessive elongation occurs, the pouch case is exposed to a risk of fine cracks or ruptures. Accordingly, when the cracks and ruptures occur at the pouch case that serves as an external material, an electrolyte leaks and reacts with oxygen. Thus, battery performance may deteriorate, and safety may not be guaranteed.

Therefore, according to the related art to solve the problems described above, a formed pouch case is sampled, and a portion, in which critical elongation is assumed to have occurred, is extracted to measure the thickness with a microscope, thereby measuring an elongation rate. Then, a defect of the portion is detected by checking whether the elongation having a level causing a risk of cracks or ruptures occurs or not.

However, in this method, arbitrary sampling is required to detect defects, and thus, there is a limitation in substantially detecting all defective pouch cases. Also, the sampling has to be performed separately for measurement, and thus, the rate and efficiency of detecting defects becomes remarkably lowered.

So, the method according to the related art could not sufficiently ensure safety of a battery, and an improvement is required because productivity of entire processes is low. That is, there is a need for developing a method for manufacturing a pouch case of a secondary battery, and a pouch film of a secondary battery and a pouch case of a secondary battery, which are capable of more easily identifying and detecting whether a crack or rupture due to elongation after forming of the pouch film occurs or not or whether the elongation has been reach a critical level in which the crack or rupture is about to occur.
Examples of background art can be found in WO2020/032480A1, JP 2017 177412 A and JP 2018 015986 A.

### DISCLOSURE OF THE INVENTION

### TECHNICAL PROBLEM

The present invention has been made to solve the above problems, and an object of the present invention is to provide a method for manufacturing a pouch case of a secondary battery, and a pouch film of a secondary battery and a pouch case of a secondary battery. During a process of manufacturing a pouch case by forming a pouch film, an elongation rate can be measured by the color of an outer layer of the pouch film without separate sampling, and it can be determined whether or not elongation has occurred which causes a critical level in which a crack is about to occur or a defective level in which a crack is occurring.

### TECHNICAL SOLUTION

A method for manufacturing a pouch case of a secondary battery according to the present invention includes: stacking a metal layer above an inner layer and stacking an outer layer, which includes colored dye particles, above the metal layer, thereby producing a pouch film; forming the pouch film into a three-dimensional shape so that an electrode assembly is accommodated therein; and measuring an elongation rate of the pouch film through color of the outer layer.

The measuring of the elongation rate may include: extracting color data of the outer layer; inputting the color data into a data table in which colors and elongation rates correspond to each other; and outputting a value of the elongation rate of the pouch film that corresponds to the input color data.

The method may further include, after the measuring of the elongation rate, determining whether formation is defective, wherein in the determining of whether formation is defective, the pouch film is determined to be defective when the elongation rate thereof is 40% or higher.

The method may further include, prior to the producing of the pouch film, manufacturing the outer layer, wherein in the manufacturing of the outer layer, the outer layer is formed by stacking polyethylene terephthalate, which includes colored dye, above nylon.

In the manufacturing of the outer layer, the outer layer may be manufactured to a thickness of 12 µm to 30 µm.

In the producing of the pouch film, the inner layer may be made of polypropylene.

In the producing of the pouch film, the metal layer may be made of aluminum.

A pouch film for manufacturing of a pouch case of a secondary battery according to the present invention includes: an inner layer; a metal layer stacked above the inner layer; and an outer layer which is stacked above the metal layer and in which colored dye particles are mixed, wherein the pouch film is configured to be formed into a three-dimensional shape so that an electrode assembly is accommodated therein.

When the pouch film is formed, the outer layer enables measurement of an elongation rate through the color of the outer layer, wherein, when the elongation occurs due to the forming of the pouch film, the concentration of the dye particles in a section, in which the elongation occurs, becomes lower than that in an other section in which the elongation does not occur.

When the pouch film is formed, the outer layer may be determined to reach critical elongation in case the color becomes brighter than reference color.

The reference color may indicate the color of the outer layer when the elongation rate reaches 40%.

The outer layer may be formed by stacking polyethylene terephthalate above nylon, and the colored dye particles may be provided in the polyethylene terephthalate.

The metal layer may be made of aluminum, and the inner layer may be made of polypropylene.

A pouch case of a secondary battery according to the present invention includes: a lower case in which a cup portion having a recessed shape is formed; and an upper case configured to cover an upper portion of the lower case from above, wherein the lower case and the upper case are manufactured by forming the pouch film according to the present invention.

The cup portion may be formed to have one bottom surface and four side surfaces, wherein the bottom surface and the side surfaces are formed such that an edge region and a central region of each of the surfaces have different colors.

The bottom surface and the side surfaces may be formed such that the edge region of each of the surfaces is brighter than the central region thereof.

The bottom surface and the side surfaces may be formed such that the edge region of each of the surfaces has a lower concentration distribution of the colored dye or pigment than that of the central region thereof.

### ADVANTAGEOUS EFFECTS

A method for manufacturing a pouch case of a secondary battery according to the present invention includes: stacking a metal layer above an inner layer and stacking an outer layer, which includes colored dye particles, above the metal layer, thereby producing a pouch film; forming the pouch film into a three-dimensional shape so that an electrode assembly is accommodated therein; and measuring an elongation rate of the pouch film through color of the outer layer. Accordingly, during a process of manufacturing a pouch case by forming the pouch film, the elongation rate can be measured by the color of an outer layer of the pouch film without separate sampling, and it can be determined whether or not elongation has occurred which causes a critical level in which a crack is about to occur or a defective level in which a crack is occurring.

### BRIEF DESCRIPTION OF THE DRAWINGS

FIG. 1 is a perspective view illustrating a general pouch case of a secondary battery.
FIG. 2 is a flowchart illustrating a method for manufacturing a pouch case of a secondary battery according to Embodiment 1 of the present invention.
FIG. 3 is a cross-sectional view illustrating a cross-section of a pouch film according to Embodiments 1 and 2 of the present invention before elongation occurs.
FIG. 4 is a cross-sectional view illustrating a cross-section of the pouch film according to Embodiments 1 and 2 of the present invention after elongation occurs.
FIG. 5 is a perspective view illustrating a pouch case of a secondary battery according to Embodiment 3 of the present invention.

### MODE FOR CARRYING OUT THE INVENTION

Hereinafter, preferred embodiments of the present invention will be described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present invention, parts irrelevant to the description are omitted, and descriptions related to well-known functions or configurations are ruled out so as not to unnecessarily obscure subject matters of the present invention. In the specification, when reference numerals are given to components in each of the drawings, the same or similar components will be designated by the same or similar reference numerals throughout the specification.

Also, terms or words used in this specification and claims should not be restrictively interpreted as ordinary meanings or dictionary-based meanings, but should be interpreted as meanings and concepts conforming to the technical ideas of the present invention on the basis of the principle that an inventor can properly define the concept of a term to describe his or her invention in the best ways.

### Embodiment 1

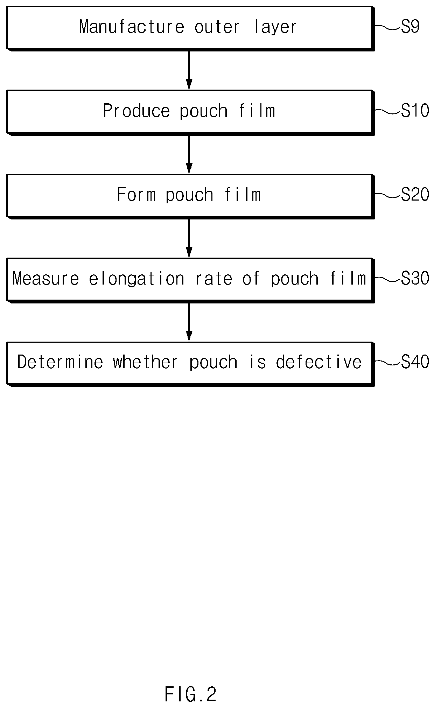

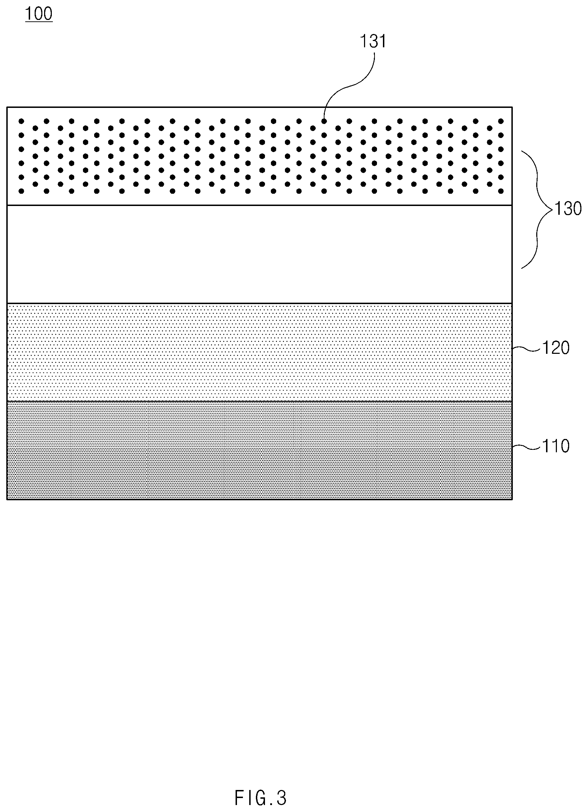

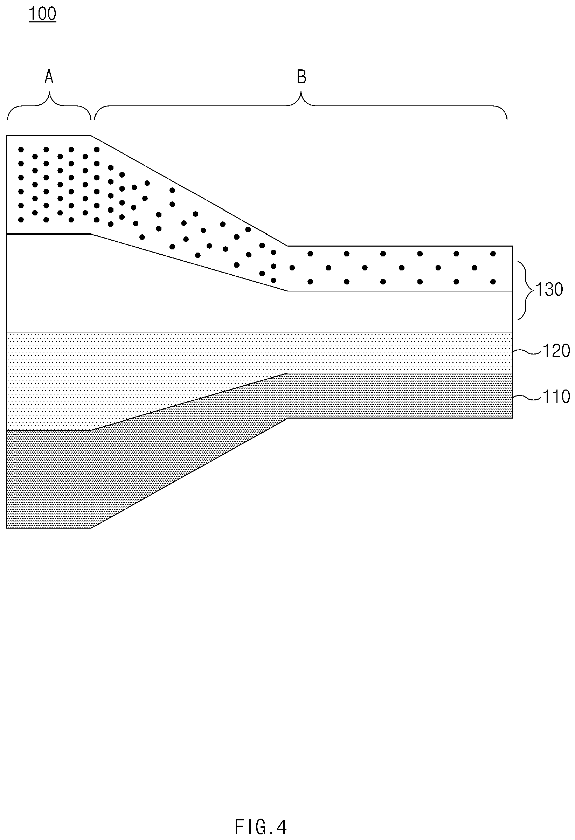

FIG. 2 is a flowchart illustrating a method for manufacturing a pouch case of a secondary battery according to Embodiment 1 of the present invention. FIG. 3 is a cross-sectional view illustrating a cross-section of the pouch film according to Embodiment 1 of the present invention before elongation occurs. FIG. 4 is a cross-sectional view illustrating a cross-section of the pouch film according to Embodiment 1 of the present invention after elongation occurs.

Referring to FIG. 2, a method for manufacturing a pouch case of a secondary battery according to Embodiment 1 of the present invention includes an operation (S10) of producing a pouch film, an operation (S20) of forming the pouch film, and an operation (S30) of measuring an elongation rate of the pouch film.

First, describing in detail the operation (S10) of producing a pouch film, a pouch film 100 is formed in a multi-layer structure in which a plurality of layers are stacked as illustrated in FIG. 3. A metal layer 120 is stacked above an inner layer 110, and an outer layer 130 is stacked above the metal layer 120.

The inner layer 110 is a layer positioned on the innermost side of the pouch film 100, and serves as a sealing material having the chemical resistance to an electrolyte and the thermal adhesion property, and is made of mainly polyolefin-based resin and preferably may be made of polypropylene (PP). The metal layer 120 is a layer interposed between the inner layer 110 and the outer layer 130, maintains the mechanical strength of the pouch film 100, and serves as a barrier to moisture and oxygen. The metal layer 120 may be made of an alloy of iron (Fe), carbon (C), chromium (Cr), and manganese (Mn), or an alloy of iron (Fe), carbon (C), chromium (Cr), and nickel (Ni), or the like, and preferably may be made of aluminum (Al). The outer layer 130 is a layer formed on the outermost side of the pouch film 100, serves to protect the battery from external impact, and is required to have insulating properties and thermal resistance properties because coming into direct contact with hardware. The material properties of the outer layer 130 and a manufacturing method therefor will be described in detail below.

The method for manufacturing a pouch case of a secondary battery according to Embodiment 1 of the present invention may include an operation (S9) of manufacturing the outer layer, prior to the operation (S10) of producing the pouch film. The material of the outer layer 130 may include a single layer having one selected from polyethylene (PE), polypropylene (PP), polyethylene terephthalate (PET), nylon, low density polyethylene (LDPE), and high density polyethylene (HDPE), or a composite layer having two or more selected therefrom. In the operation (S9) of manufacturing the outer layer according to Embodiment 1 of the present invention, the outer layer 130 may be formed by stacking a polyethylene terephthalate (PET), in which colored dye is included, above a nylon film having a transparent material.

Here, the dye includes organic dye or inorganic dye and is not specifically limited, and anything can be used as long as it can be included, as colored dye, in the outer layer. Preferably, anything can be used without limitation as long as it can be mixed in or attached to the polyethylene terephthalate (PET). Also, not only dye but also pigment may be used.

The total thickness of the pouch film 100 may be typically 40 to 120 µm. The inner layer 110 may have a thickness of 10 to 40 µm and the metal layer 120 may have a thickness of 20 to 100 µm. Preferably, the outer layer 130 may be manufactured to a thickness of 12 µm to 30 µm.

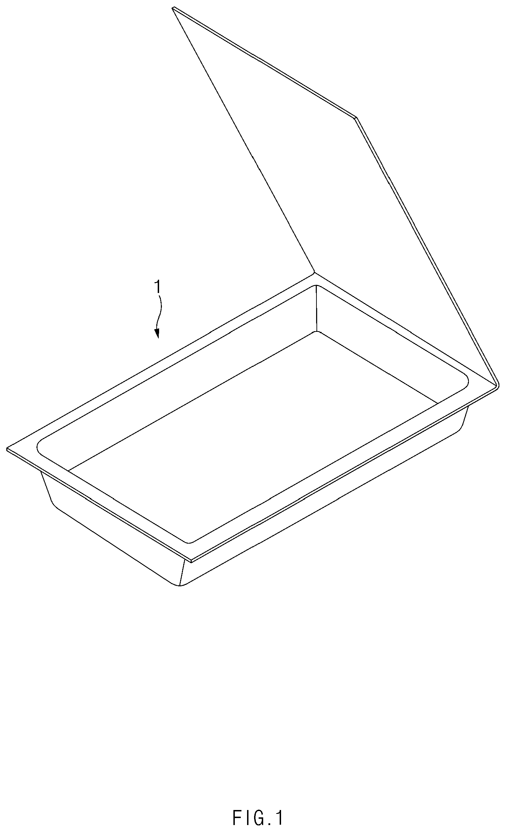

After the pouch film is produced (S10), the pouch film is formed into a three-dimensional shape (S20) so that an electrode assembly can be accommodated in the pouch film 100. The pouch-type secondary battery may be mainly divided into a pouch case 1 and an electrode assembly accommodated in the pouch case 1. The pouch case 1 is divided into a lower case and an upper case for covering the lower case as illustrated in FIG. 1, and the lower case has a cup portion formed so as to accommodate the electrode assembly. The pouch film 100 stacked in a multi-layer structure is subjected to a process in which a cup portion is formed by a forming apparatus. After regions other than a cup portion of the pouch film 100 are fixed, the cup portion is pressed by a press punch. As the pouch film 100 elongates, the pouch case 1 is formed that has the cup portion having a shape corresponding to the punch. In this case, the elongation occurs mainly at an edge portion of the pouch case 1 including a rim of the cup portion of the pouch case 1, and a crack or rupture occurs mainly therein.

The method for manufacturing a pouch case of a secondary battery according to Embodiment 1 of the present invention measures (S30) an elongation rate of the pouch film 100 through the color of the outer layer 130 of the pouch film 100. The measurement (S30) of the elongation rate of the pouch film 100 through the color will be described in detail below with reference to FIG. 4.

As described above, the outer layer 130 is formed by stacking the polyethylene terephthalate, in which colored dye particles 131 are included, above the transparent nylon. Before the elongation occurs, the pouch film 100 has a color concentration of the dye particles 131 of the outer layer 130 when viewed from the outside. However, when the elongation occurs due to the forming of the pouch film 100, the concentration of the dye particles 131 in a section B, in which the elongation occurs, becomes lower than that in a section A in which the elongation does not occur as illustrated in FIG. 4. As a result, the color concentration of the outer layer 130 in the section B, in which the elongation occurs, becomes lighter and is mixed with the color of the metal layer 120 stacked below the outer layer 130. Thus, the color of the pouch film 100 in the elongation occurrence section B changes. Particularly, when the metal layer 120 is made of aluminum (Al) having a bright color, the color of the colored dye particles 131 becomes lighter and is mixed with the bright color of the aluminum (Al) as the elongation occurs. The pouch film 100 in the section B, in which the elongation occurs, is converted into a brighter color than that in the section A in which the elongation does not occur. Accordingly, the elongation rate may be measured (S30) through the color of the outer layer 130 of the pouch film 100.

The method for manufacturing a pouch case of a secondary battery according to Embodiment 1 of the present invention measures the elongation rate through the color of the outer layer 130 of the pouch film 100 without separate sampling, and may determine whether or not elongation has occurred which causes a critical level in which a crack is about to occur or a defective level in which a crack is occurring. Also, objects to be inspected for defects and rates to determine defects are made to increase, and times and costs consumed during relevant processes is made to significantly decrease. Thus, the productivity is enhanced, and quality and price competitiveness of products are secured.

Next, the operation (S30) of measuring the elongation rate will be described in detail. The operation (S30) of measuring the elongation rate may include an operation of extracting color data of the outer layer 130, an operation of inputting the color data into a data table in which colors and elongation rates correspond to each other, and an operation of outputting a value of the elongation rate of the pouch film that corresponds to the input color data.

First, when examining the operation of extracting the color data of the outer layer 130, the color of the outer layer 130 may be extracted by an input means and a processor. For example, the color of the outer layer 130 of the pouch film 100 is recognized through an input means such as a camera module including a lens and an image or color detection sensor, and then, the color is identified by a processor operatively coupled to the sensor. Consequently, the color is extracted as data.

Subsequently, the extracted color data is input into a data table in which colors and elongation rates have been stored and corresponded to each other. Here, the data table having the colors and elongation rates corresponding to each other represents a table in which changes in color of the pouch film 100 according to levels of occurrence of elongation are made into data and stored on the basis of the initial color of the pouch film 100 in which the colored dye particles 131 having a pre-set concentration are included in the outer layer 130. For example, in the table, the concentration ratio of specific colored dye contained in the PET layer is set, and the pouch film 100 including the outer layer 130 produced according to the set value is elongated. Then, changes in color for each of sections of elongation rates are made into data, and the colors of the pouch film 100 and elongation rates are made to correspond to each other.

When the extracted color data is input into the data table, the stored color data relevant to the input color data is selected, and the elongation rate value of the pouch film 100 corresponding thereto is outputted. Thus, when compared to the method according to the related art of sampling a pouch case, extracting a portion in which elongation occurs, and then identifying the thickness with a microscope, the elongation rate may be measured only with the color data by using the stored data table. Thus, the time consumed in the defect detection operation may be dramatically reduced, and the elongation rate may be measured only with vision inspection without separate sampling. Therefore, the defect detection work for all pouch cases being formed may be easily performed.

The method further includes, after the operation (S30) of measuring the elongation rate of the pouch film, an operation (S40) of determining whether formation is defective. In the operation (S40) of determining whether formation is defective, the pouch film 100 may be determined to be defective when the elongation rate thereof is 40% or higher. Referring to this, for the pouch film 100 in which the metal layer 120 is made of aluminum, there is a remarkably high possibility that crack or rupture occurs when the elongation of 40% occurs. This is regarded as elongation causing a critical level and thus determined to be defective. So, the pouch case having a risk of the occurrence is removed in advance even though the crack or rupture does not occur, and thus, the safety of the battery may be ensured, and the time consumed in defect determination may be remarkably reduced.

### Embodiment 2

FIG. 3 is a cross-sectional view illustrating a cross-section of a pouch film according to Embodiment 2 of the present invention before elongation occurs. FIG. 4 is a cross-sectional view illustrating a cross-section of the pouch film according to Embodiment 2 of the present invention after elongation occurs.

Embodiment 2 of the present invention is different from Embodiment 1 in that the invention relates to a pouch film 100 which is used in the method for manufacturing a pouch case of a secondary battery of Embodiment 1.

Embodiment 2 will be described with a focus on the differences, and the features common to Embodiment 1 will be omitted as much as possible. That is, it is obvious that features not described in Embodiment 2 may be regarded as the features of Embodiment 1 if necessary.

Referring to FIG. 3, a pouch film 100 of a secondary battery according to Embodiment 2 of the present invention includes an inner layer 110, a metal layer 120, and an outer layer 130.

The metal layer 120 is stacked above the inner layer 110, and the outer layer 130, in which colored dye particles 131 are mixed, is formed above the metal layer 120. Consequently, the pouch film 100 is constituted. The metal layer 120 may be made of aluminum (AL), and the inner layer 110 may be made of polypropylene (PP). The outer layer 130 may be formed by stacking polyethylene terephthalate (PET) above nylon, and the colored dye particles 131 may be included in the polyethylene terephthalate PET.

Particularly, the outer layer 130 is produced such that the elongation rate can be measured through the color of the outer layer 130 when the pouch film 100 is formed. Specifically, when the pouch film 100 is formed, it may be determined that elongation reaches critical elongation in case the color becomes brighter than reference color. The reference color may indicate, for example, the color of the outer layer 130 when the elongation rate reaches 40%.

The pouch film 100 according to Embodiment 2 of the present invention measures the elongation rate through the color of the outer layer 130 of the pouch film 100 without separate sampling, and may determine whether or not elongation has occurred which causes a critical level in which a crack is about to occur or a defective level in which a crack is occurring.

### Embodiment 3

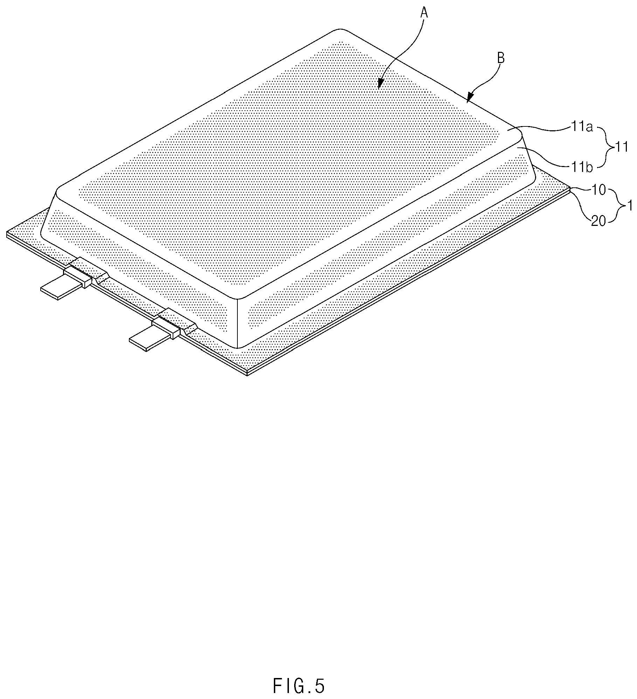

FIG. 5 is a perspective view illustrating a pouch case of a secondary battery according to Embodiment 3 of the present invention.

Embodiment 3 of the present invention is different from Embodiment 1 in that the invention relates to a pouch case of a secondary battery which is manufactured by the method for manufacturing a pouch case of a secondary battery of Embodiment 1 and the pouch film of Embodiment 2.

Embodiment 3 will be described with a focus on the differences, and the features common to Embodiment 1 and Embodiment 2 will be omitted as much as possible. That is, it is obvious that features not described in Embodiment 3 may be regarded as the features of Embodiment 1 and Embodiment 2 if necessary.

Referring to FIG. 5, a pouch case 1 of a secondary battery according to Embodiment 3 of the present invention includes a lower case 10, in which a cup portion 11 having a recessed shape is formed, and an upper case 20, which covers an upper portion of the lower case 10 from above. The lower case 10 and the upper case 20 are manufactured by forming a pouch film. Also, the pouch film is constituted by an inner layer, a metal layer stacked above the inner layer, and an outer layer stacked above the metal layer and including colored dye or pigment particles. Here, the pouch film may represent the pouch film of Embodiment 2 described above, and the inner layer, the metal layer, and the outer layer may be understood as being identical to those of the Embodiment 2.

Thus, with respect to the pouch case 1 according to Embodiment 3 of the present invention, a change in color is observed through vision inspection when the pouch case 1 is elongated and formed. A section of elongation and a degree of elongation are checked, and thus, it may be easily identified whether or not elongation has occurred which causes a critical level or a defective level in which a crack is occurring.

Here, the recessed shape of the cup portion 11 represents a recessed shape when viewed in a direction from the upper case 20 to the lower case 10, and may represent a shape that protrudes outward when viewed in a direction opposite to the recessed direction.

Meanwhile, the cup portion 11 may be formed to have one bottom surface 11a and four side surfaces 11b, and the bottom surface 11a and the side surfaces 11b may be formed such that an edge region and a central region of each of the surfaces have different colors. That is, the edge region may be a section B in which elongation occurs, and the central region may be a section A in which the elongation does not occur. As described above, in the pouch case 1 according to the present invention, the exterior color of the edge region in which the elongation mainly occurs is checked, and the degree of elongation may be identified. Meanwhile, the colors of the edge region and the central region are not clearly distinguished by a boundary at a specific location. The color may become lighter or darker gradually from the edge region toward the central region.

Also, the bottom surface 11a and the side surfaces 11b may be formed such that the edge region of each of the surfaces may be brighter than the central region. This indicates that when the metal layer is made of aluminum having a bright color, the color of the colored dye particles becomes lighter and is mixed with the bright color of the aluminum as the elongation occurs. The edge region of each surface, which is the section in which the elongation occurs, is formed to have a brighter color than the central region which is the section in which the elongation does not occur.

However, this is not necessarily limited thereto, and the edge region of each surface may have a darker color than the central region as necessary. That is, the bottom surface 11a and the side surfaces 11b may be formed such that the edge region of each of the surfaces has a lower concentration distribution of the colored dye or pigment than that of the central region thereof. The relative brightness and darkness in the edge region and the central region of the pouch case 1 may change according to the color of the metal layer of the pouch film and the color of the colored dye.

Although the present invention is described by specific embodiments and drawings, the present invention is defined by the scope of the appended claims.

### [Description of the Symbols]

1: Pouch case
10: Lower case
20: Upper case
11: Cup portion
11a: Bottom surface
11b: Side surface
100: Pouch film
110: Inner layer
120: Metal layer
130: Outer layer
131: Dye particle
A: Section in which elongation does not occur
B: Section in which elongation occurs
S9: Manufacture outer layer
S10: Produce pouch film
S20: Form pouch film
S30: Measure elongation rate of pouch film
S40: Determine whether pouch is defective

## Claims

1. A method for manufacturing a pouch case (1) of a secondary battery, the method comprising:
stacking a metal layer (120) above an inner layer (110) and stacking an outer layer (130), which comprises colored dye particles (131), above the metal layer (120), thereby producing a pouch film (S10);
forming the pouch film (S20) into a three-dimensional shape so that an electrode assembly is accommodated therein; and
measuring an elongation rate of the pouch film (S30) through color of the outer layer (130).

2. The method of claim 1, wherein the measuring of the elongation rate (S30) comprises:
extracting color data of the outer layer (130);
inputting the color data into a data table in which colors and elongation rates correspond to each other; and
outputting a value of the elongation rate of the pouch film (100) that corresponds to the input color data.

3. The method of claim 1, further comprising, after the measuring of the elongation rate (S30),
determining whether formation is defective,
wherein in the determining of whether formation is defective, the pouch film (100) is determined to be defective when the elongation rate thereof is 40% or higher.

4. The method of claim 1, further comprising, prior to the producing of the pouch film (100),
manufacturing the outer layer (S9),
wherein in the manufacturing of the outer layer (S9), the outer layer (130) is formed by stacking polyethylene terephthalate, which comprises colored dye, above nylon.

5. The method of claim 4, wherein in the manufacturing of the outer layer (S9), the outer layer (130) is manufactured to a thickness of 12 µm to 30 µm.

6. The method of claim 1, wherein in the producing of the pouch film (100), the inner layer (110) is made of polypropylene.

7. A pouch film (100) for manufacturing a pouch case (1) of a secondary battery, the pouch film (100) comprising:
an inner layer (110);
a metal layer (120) stacked above the inner layer (110); and
an outer layer (130) which is stacked above the metal layer (120) and in which colored dye particles (131) are mixed,
wherein the pouch film (100) is configured to be formed into a three-dimensional shape so that an electrode assembly is accommodated therein,
**characterized in that**, the outer layer (130) enables measurement of an elongation rate through the color of the outer layer (130), wherein, when the elongation occurs due to the forming of the pouch film (100), the concentration of the dye particles (131) in a section (B), in which the elongation occurs, becomes lower than that in an other section (A) in which the elongation does not occur.

8. The pouch film (100) of claim 7, wherein when the pouch film (100) is formed, the outer layer (130) is determined to reach critical elongation in case the color becomes brighter than reference color.

9. The pouch film (100) of claim 8, wherein the reference color indicates the color of the outer layer (130) when the elongation rate reaches 40%.

10. The pouch film (100) of claim 7, wherein the outer layer (130) is formed by stacking polyethylene terephthalate above nylon, and the colored dye particles (131) are provided in the polyethylene terephthalate.

11. A pouch case (1) of a secondary battery, the pouch case (1) comprising:
a lower case (10) in which a cup portion (11) having a recessed shape is formed; and
an upper case (20) configured to cover an upper portion of the lower case (10) from above,
**characterized in that** the lower case (10) and the upper case (20) are manufactured by forming the pouch film (100) according to any one of claims 7 to 10.

12. The pouch case (1) of claim 11, wherein the cup portion (11) is formed to have one bottom surface (11a) and four side surfaces (11b),
wherein the bottom surface (11a) and the side surfaces (11b) are formed such that an edge region and a central region of each of the surfaces have different colors.

13. The pouch case (1) of claim 12, wherein the bottom surface (11a) and the side surfaces (11b) are formed such that the edge region of each of the surfaces is brighter than the central region thereof.

14. The pouch case of claim 12, wherein the bottom surface (11a) and the side surfaces (11b) are formed such that the edge region of each of the surfaces has a lower concentration distribution of the colored dye (131) or pigment than that of the central region thereof.

## Patentansprüche

1. Verfahren zur Herstellung eines Beutelgehäuses (1) einer Sekundärbatterie, wobei das Verfahren umfasst: Stapeln einer Metallschicht (120) über einer Innenschicht (110) und Stapeln einer Außenschicht (130), die farbige Farbstoffpartikel (131) umfasst, über der Metallschicht (120), wodurch eine Beutelfolie (S10) erzeugt wird; Formen der Beutelfolie (S20) zu einer dreidimensionalen Form, sodass eine Elektrodenanordnung darin aufgenommen wird; und Messen einer Dehnungsrate der Beutelfolie (S30) durch die Farbe der Außenschicht (130).

2. Verfahren nach Anspruch 1, wobei das Messen der Dehnungsrate (S30) umfasst:
Extrahieren von Farbdaten der Außenschicht (130); Eingeben der Farbdaten in eine Datentabelle, in der Farben und Dehnungsraten einander entsprechen; und Ausgeben eines Werts der Dehnungsrate der Beutelfolie (100), der den eingegebenen Farbdaten entspricht.

3. Verfahren nach Anspruch 1, ferner umfassend, nach dem Messen der Dehnungsrate (S30), das Bestimmen, ob die Formung fehlerhaft ist, wobei beim Bestimmen, ob die Formung fehlerhaft ist, die Beutelfolie (100) als fehlerhaft bestimmt wird, wenn ihre Dehnungsrate 40 % oder mehr beträgt.

4. Verfahren nach Anspruch 1, ferner umfassend, vor dem Erzeugen der Beutelfolie (100), das Herstellen der Außenschicht (S9), wobei beim Herstellen der Außenschicht (S9) die Außenschicht (130) durch Stapeln von Polyethylenterephthalat, das farbigen Farbstoff umfasst, über Nylon gebildet wird.

5. Verfahren nach Anspruch 4, wobei beim Herstellen der Außenschicht (S9) die Außenschicht (130) mit einer Dicke von 12 µm bis 30 µm hergestellt wird.

6. Verfahren nach Anspruch 1, wobei beim Erzeugen der Beutelfolie (100) die Innenschicht (110) aus Polypropylen hergestellt ist.

7. Beutelfolie (100) zur Herstellung eines Beutelgehäuses (1) einer Sekundärbatterie, wobei die Beutelfolie (100) umfasst: eine Innenschicht (110); eine Metallschicht (120), die über der Innenschicht (110) gestapelt ist; und eine Außenschicht (130), die über der Metallschicht (120) gestapelt ist und in der farbige Farbstoffpartikel (131) gemischt sind, wobei die Beutelfolie (100) so konfiguriert ist, dass sie zu einer dreidimensionalen Form geformt wird, sodass eine Elektrodenanordnung darin aufgenommen wird, **dadurch gekennzeichnet, dass** die Außenschicht (130) die Messung einer Dehnungsrate durch die Farbe der Außenschicht (130) ermöglicht, wobei, wenn die Dehnung aufgrund des Formens der Beutelfolie (100) auftritt, die Konzentration der Farbstoffpartikel (131) in einem Abschnitt (B), in dem die Dehnung auftritt, niedriger wird als die in einem anderen Abschnitt (A), in dem die Dehnung nicht auftritt.

8. Beutelfolie (100) nach Anspruch 7, wobei, wenn die Beutelfolie (100) geformt wird, bestimmt wird, dass die Außenschicht (130) eine kritische Dehnung erreicht, falls die Farbe heller wird als eine Referenzfarbe.

9. Beutelfolie (100) nach Anspruch 8, wobei die Referenzfarbe die Farbe der Außenschicht (130) angibt, wenn die Dehnungsrate 40 % erreicht.

10. Beutelfolie (100) nach Anspruch 7, wobei die Außenschicht (130) durch Stapeln von Polyethylenterephthalat über Nylon gebildet wird, und die farbigen Farbstoffpartikel (131) im Polyethylenterephthalat bereitgestellt sind.

11. Beutelgehäuse (1) einer Sekundärbatterie, wobei das Beutelgehäuse (1) umfasst: ein unteres Gehäuse (10), in dem ein becherförmiger Abschnitt (11) mit einer vertieften Form ausgebildet ist; und ein oberes Gehäuse (20), das so konfiguriert ist, dass es einen oberen Abschnitt des unteren Gehäuses (10) von oben abdeckt, **dadurch gekennzeichnet, dass** das untere Gehäuse (10) und das obere Gehäuse (20) durch Formen der Beutelfolie (100) nach einem der Ansprüche 7 bis 10 hergestellt werden.

12. Beutelgehäuse (1) nach Anspruch 11, wobei der becherförmige Abschnitt (11) so ausgebildet ist, dass er eine Bodenfläche (11a) und vier Seitenflächen (11b) aufweist, wobei die Bodenfläche (11a) und die Seitenflächen (11b) so ausgebildet sind, dass ein Randbereich und ein zentraler Bereich jeder der Flächen unterschiedliche Farben aufweisen.

13. Beutelgehäuse (1) nach Anspruch 12, wobei die Bodenfläche (11a) und die Seitenflächen (11b) so ausgebildet sind, dass der Randbereich jeder der Flächen heller ist als ihr zentraler Bereich.

14. Beutelgehäuse nach Anspruch 12, wobei die Bodenfläche (11a) und die Seitenflächen (11b) so ausgebildet sind, dass der Randbereich jeder der Flächen eine niedrigere Konzentrationsverteilung des farbigen Farbstoffs (131) oder Pigments aufweist als die ihres zentralen Bereichs.

## Revendications

1. Procédé de fabrication d'un boîtier d'enveloppe (1) d'une batterie secondaire, le procédé comprenant :
l'empilement d'une couche métallique (120) au-dessus d'une couche interne (110) et l'empilement d'une couche externe (130), qui comprend des particules de colorant colorées (131), au-dessus de la couche métallique (120), pour ainsi produire un film d'enveloppe (S10) ;
le formage du film d'enveloppe (S20) en une forme tridimensionnelle de sorte qu'un ensemble d'électrodes y soit logé ; et
la mesure d'un taux d'allongement du film d'enveloppe (S30) par le biais de la couleur de la couche externe (130).

2. Procédé selon la revendication 1, dans lequel la mesure du taux d'allongement (S30) comprend :
l'extraction de données de couleur de la couche externe (130) ;
l'entrée des données de couleur dans une table de données dans laquelle des couleurs et des taux d'allongement se correspondent ; et
la sortie d'une valeur du taux d'allongement du film d'enveloppe (100) qui correspond aux données de couleur d'entrée.

3. Procédé selon la revendication 1, comprenant en outre, après la mesure du taux d'allongement (S30), la détermination si le formage est défectueux, dans lequel, dans la détermination si le formage est défectueux, le film d'enveloppe (100) est déterminé comme étant défectueux lorsque son taux d'allongement est de 40 % ou plus.

4. Procédé selon la revendication 1, comprenant en outre, avant la production du film d'enveloppe (100), la fabrication de la couche externe (S9), dans lequel, dans la fabrication de la couche externe (S9), la couche externe (130) est formée en empilant du polyéthylène téréphtalate, qui comprend un colorant coloré, au-dessus de nylon.

5. Procédé selon la revendication 4, dans lequel, dans la fabrication de la couche externe (S9), la couche externe (130) est fabriquée à une épaisseur de 12 µm à 30 µm.

6. Procédé selon la revendication 1, dans lequel, dans la production du film d'enveloppe (100), la couche interne (110) est faite de polypropylène.

7. Film d'enveloppe (100) pour la fabrication d'un boîtier d'enveloppe (1) d'une batterie secondaire, le film d'enveloppe (100) comprenant :
une couche interne (110) ;
une couche métallique (120) empilée au-dessus de la couche interne (110) ; et
une couche externe (130) qui est empilée au-dessus de la couche métallique (120) et dans laquelle des particules de colorant colorées (131) sont mélangées,
dans lequel le film d'enveloppe (100) est configuré pour être mis en forme en une forme tridimensionnelle de sorte qu'un ensemble d'électrodes y soit logé,
**caractérisé en ce que**, la couche externe (130) permet la mesure d'un taux d'allongement par le biais de la couleur de la couche externe (130), dans lequel, lorsque l'allongement se produit en raison du formage du film d'enveloppe (100), la concentration des particules de colorant (131) dans une section (B), dans laquelle l'allongement se produit, devient inférieure à celle dans une autre section (A) dans laquelle l'allongement ne se produit pas.

8. Film d'enveloppe (100) selon la revendication 7, dans lequel, lorsque le film d'enveloppe (100) est mis en forme, la couche externe (130) est déterminée comme atteignant un allongement critique au cas où la couleur devient plus claire que la couleur de référence.

9. Film d'enveloppe (100) selon la revendication 8, dans lequel la couleur de référence indique la couleur de la couche externe (130) lorsque le taux d'allongement atteint 40 %.

10. Film d'enveloppe (100) selon la revendication 7, dans lequel la couche externe (130) est formée en empilant du polyéthylène téréphtalate au-dessus de nylon, et les particules de colorant colorées (131) sont disposées dans le polyéthylène téréphtalate.

11. Boîtier d'enveloppe (1) d'une batterie secondaire, le boîtier d'enveloppe (1) comprenant :
un boîtier inférieur (10) dans lequel une partie en forme de cuvette (11) ayant une forme évidée est formée ; et
un boîtier supérieur (20) configuré pour couvrir une partie supérieure du boîtier inférieur (10) par le dessus,
**caractérisé en ce que** le boîtier inférieur (10) et le boîtier supérieur (20) sont fabriqués en mettant en forme le film d'enveloppe (100) selon l'une quelconque des revendications 7 à 10.

12. Boîtier d'enveloppe (1) selon la revendication 11, dans lequel la partie en forme de cuvette (11) est formée pour avoir une surface inférieure (11a) et quatre surfaces latérales (11b), dans lequel la surface inférieure (11a) et les surfaces latérales (11b) sont formées de telle sorte qu'une zone de bord et une zone centrale de chacune des surfaces aient des couleurs différentes.

13. Boîtier d'enveloppe (1) selon la revendication 12, dans lequel la surface inférieure (11a) et les surfaces latérales (11b) sont formées de telle sorte que la zone de bord de chacune des surfaces soit plus claire que sa zone centrale.

14. Boîtier d'enveloppe selon la revendication 12, dans lequel la surface inférieure (11a) et les surfaces latérales (11b) sont formées de telle sorte que la zone de bord de chacune des surfaces a une distribution de concentration inférieure du colorant coloré (131) ou du pigment à celle de sa zone centrale.
